# EUROPÄISCHE PATENTSCHRIFT

(11) **EP 1 091 868 B1**
(45) Veröffentlichungstag und Bekanntmachung des Hinweises auf die Patenterteilung: **03.04.2002**
(21) Anmeldenummer: 99931194.7
(22) Anmeldetag: 26.06.1999
(51) Int. Cl.: B62D 5/06

(54) **HILFSKRAFTLENKUNG MIT HYDRAULISCHER HILFSKRAFTUNTERSTÜTZUNG**
POWER-ASSISTED STEERING WITH HYDRAULIC POWER ASSISTANCE
DIRECTION ASSISTEE HYDRAULIQUEMENT

(30) Priorität: 02.07.1998 DE 19829531
(43) Veröffentlichungstag der Anmeldung: 18.04.2001
(73) Patentinhaber: ZF Lenksysteme GmbH, 73522 Schwäbisch Gmünd (DE)
(72) Erfinder: ELSER, Dieter, D-73547 Essingen (DE); BRAUN, Andreas, D-73529 Schwäbisch Gmünd (DE); ZEITZ, Wolfgang, D-73527 Schwäbisch Gmünd (DE)
(86) Internationale Anmeldenummer: EP9904445
(87) Internationale Veröffentlichungsnummer: WO0001568

(56) Entgegenhaltungen:
- EP-B- 0 440 638
- US-A- 5 553 683

## Beschreibung

Die Erfindung betrifft eine Hilfskraftlenkung mit hydraulischer Hilfskraftunterstützung für Kraftfahrzeuge nach dem Oberbegriff des Anspruches 1. Dabei ist eine mit einem Lenkhandrad versehene Lenkspindel mit einem Eingangsglied eines Lenkgetriebes verbunden. Ein Ausgangsglied des Lenkgetriebes ist mit zu lenkenden Rädern des Fahrzeuges verbunden. Zwei Arbeitsräume eines Servomotors einer Kraftverstärkungseinrichtung sind entsprechend einem anstehenden Drehmoment im Bereich Lenkspindel/Eingangsglied über ein Lenkventil von einer Servopumpe mit Druckmittel beaufschlagbar. Wenigstens ein Sensor zum Erfassen eines Drehwinkels und eines Drehmomentes ist an der Lenkspindel angeordnet. Ein Sensor zum Erfassen eines Lenkwinkels ist an dem Ausgangsglied des Lenkgetriebes angeordnet. Dieser Sensor kann auch in der Drehwinkelsensorik der Lenkspindel integriert sein. Eine Rückstelleinrichtung dient zur hydraulischen Unterstützung der Rückstellung des Lenkgetriebes und der zu lenkenden Räder nach einem Loslassen des Lenkhandrades nach einem Lenkvorgang.

Eine derartige Hilfskraftlenkung ist bekannt aus der EP 0 440 638 B1. Hierbei ist zusätzlich zu einer kompletten Hilfskraftlenkung mit hydraulischer Hilfskraftunterstützung ein Elektromotor angeordnet, der dazu dient, die an dem Lenkhandrad spürbare Rückwirkungskraft in Abhängigkeit von verschiedenen Parametern zu beeinflussen. Außerdem dient der Elektromotor dazu, das Lenkventil genau in seiner Mitte zu zentrieren. Schließlich kann mit dem Elektromotor eine hydraulische Lenkachsrückstellung erreicht werden, indem nach dem Loslassen des Lenkhandrades das Lenkventil über seine Neutralstellung hinaus in eine Steuerstellung verstellt wird, die einer Lenkrichtungsumkehr entspricht.

Der Erfindung liegt die Aufgabe zugrunde, die bei der bekannten Hilfskraftlenkung vorhandenen positiven Eigenschaften, wie genaue Ventilmittenzentrierung und hydraulische Lenkachsrückstellung, durch einfachere Mittel ohne Verwendung eines Elektromotors zu verwirklichen. Außerdem soll die Lenkpräzision verbessert werden.

Diese Aufgabe wird durch die im Anspruch 1 gekennzeichnete Hilfskraftlenkung dadurch gelöst, daß sowohl die Größe und die Richtung der hydraulischen Hilfskraftunterstützung als auch die Rückstellung der zu lenkenden Räder über ein gemeinsames, elektronisch gesteuertes Elektromagnetventil gesteuert werden. Das Elektromagnetventil kann in der eigentlichen Hilfskraftlenkung integriert oder aber außerhalb an einer beliebigen Stelle angeordnet sein. Außerdem kann durch die Anordnung des Lenkkraft- und/oder Drehmomentsensors zum Erfassen der Lenkkraft eine Torsionsfeder entfallen. Durch den Lenkkraft- und/oder Drehmomentsensor können kleinste Steuerwege verwirklicht werden, so daß eine hohe Lenkpräzision erreicht wird. Die Hilfskraft für die hydraulische Hilfskraftunterstützung wird ausschließlich von der Servopumpe geliefert. Ein Elektromotor wird nicht benötigt.

Vorteilhafte und zweckmäßige Ausgestaltungen der Erfindung sind in den Unteransprüchen angegeben. Um bei einem evtl. Auftreten eines Fehlers eine Gefährdung auszuschließen, wird zwischen der Lenkspindel und dem Eingangsglied des Lenkgetriebes ein Kurzschlußventil angeordnet. An dieser Stelle sitzt sonst bei bekannten Hilfskraftlenkungen das Lenkventil. Das Kurzschlußventil ist als Drehschieberventil mit geschlossener Mitte ausgebildet, so daß in dessen Neutralstellung keine Verbindung zwischen den beiden Arbeitsräumen des Servomotors möglich ist. Erst beim Auftreten eines Fehlers wird das Kurzschlußventil in seine geöffnete Stellung umgeschaltet, so daß die beiden Arbeitsräume des Servomotors miteinander verbunden sind. Die beiden Arbeitsräume sind dann kurzgeschlossen, so daß kein Druckaufbau in dem Servomotor erfolgen kann. Die Lenkenergie entsteht in diesem Fall ausschließlich durch die mechanische Betätigung des Lenkhandrades.

Das Elektromagnetventil kann über eine Elektronik-Einheit auf einfache Art und Weise in Abhängigkeit von wenigstens einem Parameter, wie beispielsweise der Fahrgeschwindigkeit des Fahrzeugs, der Lenkgeschwindigkeit, der Giergeschwindigkeit, der Beladung des Fahrzeugs, der Beschleunigung des Fahrzeugs und anderen, gesteuert werden.

Durch entsprechende Programmierung der Elektronik-Einheit und entsprechende Sensorik kann das Elektromagnetventil durch Signale gesteuert werden, die Auskunft geben über die derzeitige Position des Fahrzeugs und über gewünschte, zukünftige Positionen. Damit ist die Option für ein automatisches Lenken in der Hilfskraftlenkung enthalten.

Der Lenkkraft- und/oder Drehmomentsensor wird zweckmäßigerweise als Druckkraftsensor oder als Piezo-Element ausgebildet. Mit solchen Elementen kann der Steuerweg auf 0 bis 0,1° reduziert werden.

Im folgenden wird die Erfindung anhand zweier in den dargestellter Ausführungsbeispiele näher erläutert. Es zeigen:

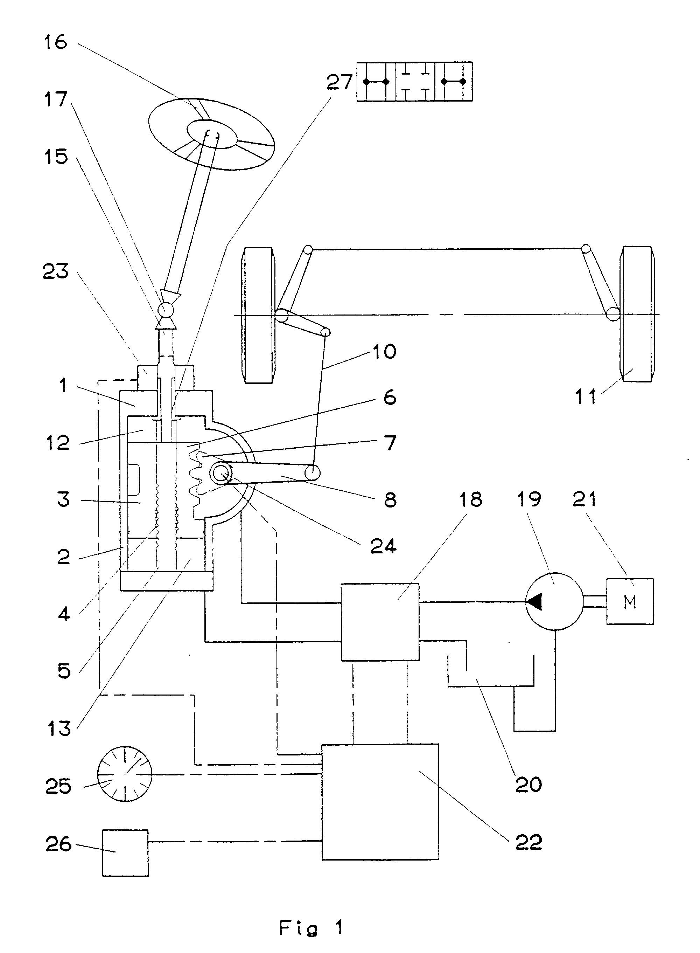

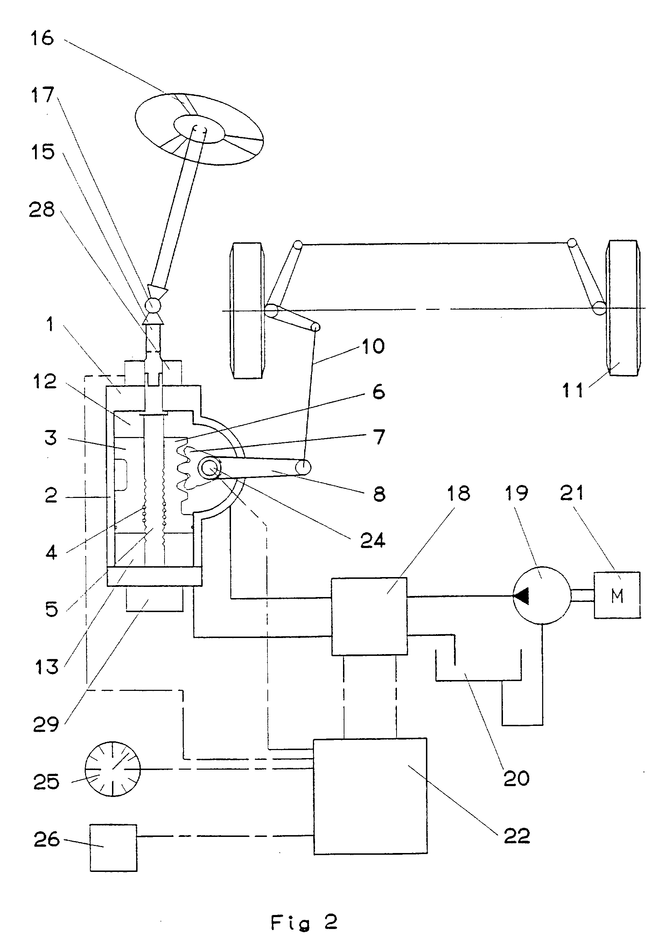

- Fig. 1 und 2: einen Längsschnitt durch ein erfindungsgemäßes Lenkgetriebe mit schematisch dargestellten Zusatzelementen in zwei Ausführungen.

Die Erfindung wird am Beispiel einer Kugelmutter-Hilfskraftlenkung erläutert. Mit gleicher Wirkung kann die Erfindung jedoch auch auf Zahnstangen-Hilfskraftlenkungen angewendet werden.

In einem Lenkgehäuse 1 enthält ein Lenkgetriebe 2 einen Arbeitskolben 3, der über eine Kugelreihe 4 mit einer Gewindespindel 5 und über eine Verzahnung 6 mit einer Segmentwelle 7 trieblich verbunden ist. Dabei bildet die Gewindespindel 5 ein Eingangsglied des Lenkgetriebes 2 und die Segmentwelle 7 ein Ausgangsglied des Lenkgetriebes 2.

Von der Segmentwelle 7 besteht über einen Lenkstockhebel 8 und ein Lenkgestänge 10 eine Verbindung zu wenigstens zwei zu lenkenden Rädern 11 des Kraftfahrzeuges.

Das Gehäuse 1 bildet zwei zylindrische Arbeitsräume 12 und 13, die durch den Arbeitskolben 3 voneinander getrennt sind.

Die Gewindespindel 5 als Eingangsglied des Lenkgetriebes 2 ist mit einer Lenkspindel 15 verbunden, die ein Lenkhandrad 16 trägt. Anstelle einer Torsionsfeder wird in der Lenkspindel 15 ein Lenkkraft- und/oder Drehmomentsensor 23 eingesetzt. Die Lenkspindel 15 kann durch ein Kreuzgelenk 17 unterteilt sein.

Die beiden Arbeitsräume 12 und 13 sind über ein Elektromagnetventil 18, beispielsweise ein Proportionalventil, mit Druckmittel beaufschlagbar, das eine Servopumpe 19 aus einem Behälter 20 fördert. Die Servopumpe 19 wird beispielsweise von einem Fahrzeugmotor 21 oder einem Elektromotor angetrieben.

Das Elektromagnetventil 18 kann mit offener oder mit geschlossener Mitte ausgeführt sein. Bei einer Ausführung mit geschlossener Mitte ist zusätzlich zu der Servopumpe 19 ein nicht dargestellter Druckmittelspeicher angeordnet.

Das Elektromagnetventil 18 wird durch eine Elektronik-Einheit 22 geregelt. Die Elektronik-Einheit 22 bekommt Signale von wenigstens einem ersten Sensor zum Erfassen eines Drehwinkels und eines Drehmomentes in der Gestalt des Lenkkraft- und/oder Drehmomentsensors 23, der an der Lenkspindel 15 angeordnet ist. Ein zweiter Sensor 24 zum Erfassen eines Lenkwinkels ist an dem Ausgangsglied, der Segmentwelle 7, des Lenkgetriebes 2 angeordnet und liefert die entsprechenden Signale an die Elektronik-Einheit 22. Mit gleicher Wirkung kann der Sensor auch an dem Eingangsglied des Lenkgetriebes 2 angeordnet sein. Weitere Signale, die Parameter für den jeweiligen Zustand des Fahrzeugs wiedergeben, werden beispielsweise von einem elektronischen Tachometer 25 und einem Giergeschwindigkeitssensor 26 der Elektronik-Einheit 22 zugeführt.

In dem Ausführungsbeispiel nach Fig. 1 ist aus Sicherheitsgründen zwischen der Lenkspindel 15 und dem Eingangsglied des Lenkgetriebes 2, d. h. der Gewindespindel 5, ein Kurzschlußventil 27 eingesetzt. Dies ist in Fig. 1 symbolisch angedeutet. Bei einem anstehenden Drehmoment im Bereich Lenkspindel 15/Gewindespindel 5, welches einer Betätigungskraft von knapp unter 450 N entspricht, kann das Kurzschlußventil 27 öffnen. Eine solche Betätigungskraft ist beim Auftreten eines Fehlers in einer Hilfskraftlenkung entsprechend einer EWG-Richtlinie zulässig. Durch das Öffnen des Kurzschlußventils 27 werden die Arbeitsräume 12 und 13 miteinander verbunden, so daß dann kein Druckaufbau in den Arbeitsräumen 12 und 13 des Lenkgetriebes 2 erfolgen kann. Das Lenkgetriebe 2 wird in diesem Fall ausschließlich durch die Handkraft am Lenkhandrad verstellt.

Durch entsprechende Programmierung der Elektronik-Einheit 22 kann die Hilfskraftlenkung für automatisches Lenken ausgelegt werden. Von einer nicht dargestellten, außerhalb des Fahrzeugs angeordneten Leiteinrichtung können Signale an die Elektronik-Einheit 22 übertragen werden. Die Leiteinrichtung kann beispielsweise mit einem Induktionskabel in der Straße ausgestattet sein. Auch eine Videoorientierung oder eine Satellitensteuerung ist möglich. Die Signale geben Auskunft über die derzeitige Position des Fahrzeugs und über gewünschte, zukünftige Positionen. Von der Elektronik-Einheit 22 werden dann die Soll-/Istwert-Abweichungen erfaßt und entsprechend korrigierte Steuerbefehle an das Elektromagnetventil 18 weitergegeben. Der Fahrer kann durch Eingreifen am Lenkhandrad 16 die Funktion der automatischen Lenkung außer Kraft setzen.

Bei dem zweiten Ausführungsbeispiel nach Fig. 2 ist das Kurzschlußventil in dem Elektromagnetventil 18 integriert. Das Kurzschlußventil ist in diesem Fall gemeinsam mit dem Elektromagnetventil 18 elektronisch ansteuerbar.

In diesem Ausführungsbeispiel ist der erste Sensor als Drehmomentsensor 28 ausgebildet. Ein weiterer Drehwinkelsensor 29 ist am unteren Ende des Lenkgehäuse 1 gekoppelt mit der Gewindespindel 5 angebaut. Durch diesen weiteren Drehwinkelsensor 29 kann die Winkelauflösung des an der Segmentwelle 7 angeordneten zweiten Sensors 24 verbessert werden.

Die übrigen Bauelemente des Ausführungsbeispieles 2 entsprechen denen des Ausführungsbeispieles 1 und sind mit gleichen Bezugszeichen bezeichnet.

Eine Lenkbewegung am Lenkhandrad 16 wird von dem Drehwinkelsensor 28 an der Lenkspindel 15 erfaßt. Die Lenkbewegung wird weitergeleitet von der Lenkspindel 15 über den Lenkkraft- und/oder Drehmomentsensor 23, der hierbei in Abhängigkeit von dem Betätigungsmoment belastet wird. Der Lenkkraft- und/oder Drehmomentsensor 23 ist an einem radialen Fortsatz der Gewindespindel 5 angeordnet. Der Lenkkraft- und/oder Drehmomentsensor 23 kann als Piezo-Element ausgebildet sein. Ebenso kann ein anderer Druckkraft-Sensor die Funktion des Lenkkraft- und/oder Drehmomentsensors 23 übernehmen.

Das Lenkwinkel-Signal und das Drehmomentsignal werden von der Elektronik-Einheit 22 ausgewertet. Die Elektronik-Einheit 22 steuert dann einen Ölstrom von der Pumpe 19 über das Elektromagnetventil 18 drehrichtungsgerecht den entsprechenden Arbeitsräumen 12 bzw. 13 zu. Da der zweite Sensor 24 an der Segmentwelle 7 nur etwa 90 Grad Gesamtwinkelausschlag aufweist und dadurch die Auflösung des Sensors relativ unpräzise ist, müßte ihm ein Übersetzungsgetriebe vorgeschaltet werden. An die Stelle eines solchen aufwendigen Übersetzungsgetriebes tritt der Drehwinkelsensor 29, der zusammen mit der Gewindespindel 5 umläuft.

Sowohl der Drehmomentsensor 28 und der Drehwinkelsensor 29 als auch der erste und der zweite Sensor 23, 24 an der Segmentwelle 7 und die Elektronik-Einheit 22 sind redundant ausgelegt. Durch die Redundanz im Bereich der Sensoren und der Elektronik-Einheit ist es möglich, Fehler zu erkennen und die hydraulische Unterstützung des Lenkgetriebes 2 über das in dem Elektromagnetventil 18 integrierte, elektronisch ansteuerbare Kurzschlußventil zu inaktivieren.

### Bezugszeichen

- 1: Lenkgehäuse
- 2: Lenkgetriebe
- 3: Arbeitskolben
- 4: Kugelreihe
- 5: Gewindespindel
- 6: Verzahnung
- 7: Segmentwelle
- 8: Lenkstockhebel
- 9: -
- 10: Lenkgestänge
- 11: Rad
- 12: Arbeitsraum
- 13: Arbeitsraum
- 14: -
- 15: Lenkspindel
- 16: Lenkhandrad
- 17: Kreuzgelenk
- 18: Elektromagnetventil
- 19: Servopumpe
- 20: Behälter
- 21: Fahrzeugmotor
- 22: Elektronik-Einheit
- 23: Lenkkraft- und/oder Drehmomentsensor = erster Sensor
- 24: Drehwinkelsensor = zweiter Sensor
- 25: Tachometer
- 26: Giergeschwindigkeitssensor
- 27: Kurzschlußventil
- 28: Lenkkraft- und/oder Drehmomentsensor
- 29: Drehwinkelsensor

## Patentansprüche

1. Hilfskraftlenkung mit hydraulischer Hilfskraftunterstützung für Kraftfahrzeuge mit folgenden Merkmalen:
- Eine mit einem Lenkhandrad (16) versehene Lenkspindel (15) ist mit einem Eingangsglied eines Lenkgetriebes (2) verbunden,
- ein Ausgangsglied des Lenkgetriebes (2) ist mit zu lenkenden Rädern (11) des Kraftfahrzeugs verbunden,
- zwei Arbeitsräume (12, 13) eines Servomotors einer Kraftverstärkungseinrichtung sind bei einem anstehenden Drehmoment im Bereich Lenkspindel (15)/Eingangsglied über ein Lenkventil von einer Servopumpe (19) mit Druckmittel beaufschlagbar,
- wenigstens ein Sensor (23) zum Erfassen eines Drehwinkels und eines Drehmomentes ist an der Lenkspindel (15) angeordnet,
- ein Sensor (24) zum Erfassen eines Lenkwinkels ist an einem Teil des Lenkgetriebes (2), insbesondere an dem Ausgangs- oder dem Eingangsglied, angeordnet,
- eine Rückstelleinrichtung dient zur hydraulischen Unterstützung der Rückstellung des Lenkgetriebes (2) und der zu lenkenden Räder (11) nach einem Loslassen des Lenkhandrades (16) nach einem Lenkvorgang,
**dadurch gekennzeichnet, daß** sowohl die Größe und die Richtung der hydraulischen Hilfskraftunterstützung als auch die Rückstellung der zu lenkenden Räder (11) über ein gemeinsames, elektronisch gesteuertes Elektromagnetventil (18) gesteuert werden und daß zum Erfassen der Lenkkraft ausschließlich ein Lenkkraft- und/oder Drehmomentsensor (23; 28) vorhanden ist.

2. Hilfskraftlenkung nach Anspruch 1, **dadurch gekennzeichnet, daß** zwischen der Lenkspindel (15) und dem Eingangsglied des Lenkgetriebes (2) ein Kurzschlußventil (27) angeordnet ist.

3. Hilfskraftlenkung nach Anspruch 2, **dadurch gekennzeichnet, daß** in der geöffneten Stellung des Kurzschlußventils (27) die beiden Arbeitsräume (12, 13) des Servomotors miteinander verbunden sind.

4. Hilfskraftlenkung nach einem der Ansprüche 1 bis 3, **dadurch gekennzeichnet, daß** das Elektromagnetventil (18) über eine Elektronik-Einheit (22) in Abhängigkeit von wenigstens einem Parameter, wie Fahrgeschwindigkeit des Fahrzeugs, Lenkgeschwindigkeit, Giergeschwindigkeit, Beladung des Fahrzeugs und anderen, steuerbar ist.

5. Hilfskraftlenkung nach einem der Ansprüche 1 bis 4, **dadurch gekennzeichnet, daß** das Elektromagnetventil (18) über die Elektronik-Einheit (22) in Abhängigkeit von Signalen steuerbar ist, die Auskunft geben über die derzeitige Position des Fahrzeugs und über gewünschte, zukünftige Positionen.

6. Hilfskraftlenkung nach Anspruch 5, **dadurch gekennzeichnet, daß** die Signale von einer außerhalb des Fahrzeugs angeordneten Leiteinrichtung an die Elektronik-Einheit (22) des Fahrzeugs übertragen werden.

7. Hilfskraftlenkung nach einem der Ansprüche 1 bis 6, **dadurch gekennzeichnet, daß** das Elektromagnetventil (18) ein Ventil mit geschlossener Mitte ist und daß zusätzlich zu der Servopumpe ein Druckmittelspeicher angeordnet ist.

8. Hilfskraftlenkung nach Anspruch 2, **dadurch gekennzeichnet, daß** das Kurzschlußventil in dem Elektromagnetventil (18) elektronisch ansteuerbar integriert ist.

9. Hilfskraftlenkung nach Anspruch 8, **dadurch gekennzeichnet, daß** zusätzlich zu dem an der Lenkspindel (15) angeordneten Sensor (23) zum Erfassen eines Drehwinkels und eines Drehmomentes ein weiterer derartiger Sensor an dem Eingangsglied des Lenkgetriebes (2) angeordnet ist.

10. Hilfskraftlenkung nach einem der Ansprüche 1 bis 9, **dadurch gekennzeichnet, daß** die Sensoren (23, 24, 28, 29) und die Elektronik-Einheit (22) redundant ausgeführt sind.

11. Hilfskraftlenkung nach einem der Ansprüche 1 bis 10, **dadurch gekennzeichnet, daß** das Elektromagnetventil (18) ein Proportionalventil ist.

12. Hilfskraftlenkung nach einem der Ansprüche 1 bis 11, **dadurch gekennzeichnet, daß** der Lenkkraft- und/oder Drehmomentsensor (28) als Druckkraft-Sensor ausgebildet ist.

13. Hilfskraftlenkung nach einem der Ansprüche 1 bis 11, **dadurch gekennzeichnet , daß** der Lenkkraft- und/oder Drehmomentsensor (28) als Piezo-Element ausgebildet ist.

## Claims

1. Servo steering system with hydraulic servo support for motor vehicles having the following features:
- a steering spindle (15) provided with a steering wheel (16) is connected to an input element of a steering mechanism (2),
- an output element of the steering mechanism (2) is connected to wheels (11) for the motor vehicle which are to be steered,
- two working spaces (12, 13) of a servo motor of a servo booster device can be supplied with pressure medium from a servo pump (19) via a steering valve when a torque is present in the region of the steering spindle (15)/input element,
- at least one sensor (23) for sensing a rotary angle and a torque is arranged on the steering spindle (15),
- a sensor (24) for sensing a steering angle is arranged on part of the steering mechanism (2), in particular on the output element or the input element,
- a resetting device serves to provide hydraulic support to the resetting of the steering mechanism (2) and the wheels (11) to be steered, after the driver lets go of the steering wheel (16) after a steering operation, **characterized in that** both the magnitude and the direction of the hydraulic servo support and the resetting of the wheels (11) to be steered are controlled by means of a common, electronically controlled solenoid valve (18), and **in that** exclusively one steering force and/or torque sensor (23; 28) is present for sensing the steering force.

2. Servo steering system according to Claim 1, **characterized in that** a short-circuit valve (27) is arranged between the steering spindle (15) and the input element of the steering mechanism (2).

3. Servo steering system according to Claim 2, **characterized in that** the two working spaces (12, 13) of the servo motor are connected to one another in the opened position of the short-circuit valve (27).

4. Servo steering system according to one of Claims 1 to 3, **characterized in that** the solenoid valve (18) can be controlled by means of an electronic unit (22) as a function of at least one parameter, such as the driving speed of the vehicle, steering speed, yaw rate, loading of the vehicle and other parameters.

5. Servo steering system according to one of Claims 1 to 4, **characterized in that** the solenoid valve (18) can be controlled by means of the electronic unit (22) as function of signals which provide information on the current position of the vehicle and on desired future positions.

6. Servo steering system according to Claim 5, **characterized in that** the signals are transmitted from a guiding device arranged outside the vehicle to the electronic unit (22) of the vehicle.

7. Servo steering system according to one of Claims 1 to 6, **characterized in that** the solenoid valve (18) is a valve with a closed centre, and **in that** a pressure medium accumulator is arranged in addition to the servo pump.

8. Servo steering system according to Claim 2, **characterized in that** the short-circuit valve is integrated in the solenoid valve (18) in an electronically actuatable fashion.

9. Servo steering system according to Claim 8, **characterized in that**, in addition to the sensor (23) which is arranged on the spindle (15), for sensing a rotary angle and a torque, a further such sensor is arranged on the input element of the steering mechanism (2).

10. Servo steering system according to one of Claims 1 to 9, **characterized in that** the sensors (23, 24, 28, 29) and the electronic unit (22) are of a redundant design.

11. Servo steering system according to one of Claims 1 to 10, **characterized in that** the solenoid valve (18) is a proportional valve.

12. Servo steering system according to one of Claims 1 to 11, **characterized in that** the steering force and/or torque sensor (28) are embodied as pressure force sensors.

13. Servo steering system according to one of Claims 1 to 11, **characterized in that** the steering force sensor and/or torque sensor (28) are embodied as piezo elements.

## Revendications

1. Direction assistée à assistance hydraulique pour véhicules automobiles, présentant les caractéristiques suivantes :
- un arbre de direction (15) doté d'un volant de direction (16) est relié à un organe d'entrée d'une transmission de direction (2),
- un organe de sortie de la transmission de direction (2) est relié aux roues (11) à diriger du véhicule automobile,
- des chambres de travail (12, 13) d'un servomoteur d'un dispositif d'amplification de force peuvent recevoir du fluide sous pression provenant d'une servopompe (19) par l'intermédiaire d'une soupape de direction lorsqu'un couple de rotation apparaît dans la région de l'arbre de direction (15) ou de l'organe d'entrée,
- au moins un capteur (23) pour détecter un angle de rotation et un couple de rotation est disposé sur l'arbre de direction (15),
- un capteur (24) pour la détection d'un angle de direction est disposé sur une partie de la transmission de direction (2), en particulier sur l'organe de sortie ou sur l'organe d'entrée,
- un dispositif de rappel sert à l'assistance hydraulique du rappel de la transmission de direction (2) et des roues à diriger (11) lorsque le volant de direction (16) a été relâché après une opération de direction,
**caractérisé en ce que** tant la grandeur et la direction de l'assistance hydraulique que le rappel des roues (11) à diriger sont commandés par une soupape électromagnétique (18) commune, commandée électroniquement, et **en ce que** pour la détection de la force de direction, il existe uniquement un capteur de force de direction et/ou de couple de rotation (23 ; 28).

2. Direction assistée selon la revendication 1, **caractérisée en ce qu'**entre l'arbre de direction (15) et l'organe d'entrée de la transmission de direction (2) est disposée une soupape de court-circuit (27).

3. Direction assistée selon la revendication 2, **caractérisée en ce que** lorsque la vanne de court-circuit (27) est en position ouverte, les deux chambres de travail (12, 13) du servomoteur sont reliées l'une à l'autre.

4. Direction assistée selon l'une des revendications 1 à 3, **caractérisée en ce que** la soupape électromagnétique (18) peut être commandée par l'intermédiaire d'une unité électronique (22) en fonction d'au moins un paramètre, comme la vitesse de roulage du véhicule, la vitesse de direction, la vitesse de lacet, l'état de charge du véhicule et autres.

5. Direction assistée selon l'une des revendications 1 à 4, **caractérisée en ce que** la soupape électromagnétique (18) peut être commandée par l'intermédiaire de l'unité électronique (22) en fonction de signaux qui donnent des informations sur la position instantanée du véhicule et sur des positions futures souhaitées.

6. Direction assistée selon la revendication 5, **caractérisée en ce que** les signaux d'un dispositif de guidage disposé à l'extérieur du véhicule sont transmis à l'unité électronique (22) du véhicule.

7. Direction assistée selon l'une des revendications 1 à 6, **caractérisée en ce que** la soupape électromagnétique (18) est une soupape à milieu fermé, et **en ce qu'**un réservoir de fluide sous pression est prévu en plus de la servopompe.

8. Direction assistée selon la revendication 2, **caractérisée en ce que** la soupape de court-circuit est intégrée dans la soupape électromagnétique (18) de manière à pouvoir être commandée électroniquement.

9. Direction assistée selon la revendication 8, **caractérisée en ce qu'**en plus du capteur (23) pour la détection d'un angle de rotation et d'un couple de rotation disposé sur l'arbre de direction (15), un autre capteur de ce type est disposé sur l'organe d'entrée de la transmission de direction (2).

10. Direction assistée selon l'une des revendications 1 à 9, **caractérisée en ce que** les capteurs (23, 24, 28, 29) et l'unité électronique (22) sont réalisés de manière à être redondants.

11. Direction assistée selon l'une des revendications 1 à 10, **caractérisée en ce que** la soupape électromagnétique (18) est une soupape proportionnelle.

12. Direction assistée selon l'une des revendications 1 à 11, **caractérisée en ce que** le capteur de force de direction et/ou de couple de rotation (28) est configuré comme capteur de pression.

13. Direction assistée selon l'une des revendications 1 à 11, **caractérisée en ce que** le capteur (28) de force de direction et/ou de couple de rotation est configuré comme piézoélément.
